# EUROPÄISCHE PATENTANMELDUNG

(11) **EP 3 951 427 A1**
(43) Veröffentlichungstag der Anmeldung: **09.02.2022**
(21) Anmeldenummer: 21186170.3
(22) Anmeldetag: 16.07.2021
(51) Int. Cl.: G01S 7/497, G01S 7/486, G01S 17/42

(54) **OPTOELEKTRONISCHER SENSOR UND VERFAHREN ZUR FRONTSCHEIBENÜBERWACHUNG**

(30) Priorität: 07.08.2020 DE 202020120908 U
(71) Anmelder: SICK AG, 79183 Waldkirch (DE)
(72) Erfinder: Jachmann, Fabian, 79102 Freiburg (DE)

(57) **Zusammenfassung**

Es wird ein optoelektronischer Sensor (10) zur Erfassung von Objekten in einem Überwachungsbereich (22) angegeben, der einen Lichtsender (12) zum Aussenden eines Abtaststrahls (16), eine bewegliche Ablenkeinheit (20) zur periodischen Abtastung des Überwachungsbereichs (22) mit dem Abtaststrahl (16), einen Lichtempfänger (28) zum Erzeugen eines Empfangssignals aus dem von den Objekten remittierten Abtaststrahl (24), eine Frontscheibe (40) sowie eine Steuer- und Auswertungseinheit (34) aufweist, die dafür ausgebildet ist, aus dem Empfangssignal Informationen über die Objekte in dem Überwachungsbereich (22) zu gewinnen sowie in einer Frontscheibenüberwachung eine beeinträchtigte Lichtdurchlässigkeit der Frontscheibe (40) durch Bewertung eines Frontscheibenreflexes (44) zu erkennen, der an der Frontscheibe (40) aus dem Abtaststrahl (16) erzeugt ist. Dabei ist die Steuer- und Auswertungseinheit (34) weiterhin dafür ausgebildet, die Empfindlichkeit der Erfassung für die Frontscheibenüberwachung zu erhöhen.

## Beschreibung

Die Erfindung betrifft einen optoelektronischen Sensor, insbesondere Laserscanner, und ein Verfahren zur Frontscheibenüberwachung nach dem Oberbegriff von Anspruch 1 beziehungsweise 14.

Für optische Überwachungen werden häufig Laserscanner eingesetzt. Darin überstreicht ein von einem Laser erzeugter Lichtstrahl mit Hilfe einer Ablenkeinheit periodisch einen Überwachungsbereich. Das Licht wird an Objekten in dem Überwachungsbereich remittiert und in dem Laserscanner ausgewertet. Aus der Winkelstellung der Ablenkeinheit wird auf die Winkellage des Objektes und aus der Lichtlaufzeit unter Verwendung der Lichtgeschwindigkeit zusätzlich auf die Entfernung des Objektes von dem Laserscanner geschlossen. Dabei sind zwei grundsätzliche Prinzipien bekannt, die Lichtlaufzeit zu bestimmen. Bei phasenbasierten Verfahren wird das Sendelicht moduliert und die Phasenverschiebung des empfangenen gegenüber dem gesendeten Licht ausgewertet. Bei pulsbasierten Verfahren oder Pulslaufzeitverfahren, wie sie in der Sicherheitstechnik bevorzugt eingesetzt werden, arbeitet der Sender in einem Einzelpulsbetrieb mit verhältnismäßig hohen Pulsenergien, und der Laserscanner misst Objektabstände anhand der Laufzeit zwischen dem Aussenden und Empfangen eines Einzellichtpulses. In einem beispielsweise aus der EP 2 469 296 B1 bekannten Pulsmittelungsverfahren werden für eine Messung eine Vielzahl von Einzelpulsen ausgesandt und die Empfangspulse statistisch ausgewertet.

Mit den Winkel- und Entfernungsangaben ist der Ort eines Objektes in dem Überwachungsbereich in zweidimensionalen Polarkoordinaten erfasst. Damit lassen sich die Positionen von Objekten ermitteln oder deren Kontur bestimmen. Die dritte Raumkoordinate kann durch eine Relativbewegung in Querrichtung ebenfalls erfasst werden, beispielsweise durch einen weiteren Bewegungsfreiheitsgrad der Ablenkeinheit, indem Laserscanner oder indem das Objekt relativ zu dem Laserscanner befördert wird. So können auch dreidimensionale Konturen ausgemessen werden.

Der Drehspiegel des Laserscanners wird manchmal dadurch ersetzt, dass der gesamte Messkopf samt Lichtsender und Lichtempfänger rotiert. Ein solcher Scanner wird in der DE 197 57 849 B4 offenbart. In der EP 2 388 619 A1 ist ebenfalls eine drehbare Sende-/Empfangseinheit vorgesehen. Sie wird beispielsweise nach dem Transformationsprinzip von den drehfesten Bereichen des Sensors mit Energie versorgt, während die Datenübertragung drahtlos per Funk oder auf optischem Wege erfolgt.

Laserscanner werden nicht nur für allgemeine Messaufgaben, sondern auch in der Sicherheitstechnik beziehungsweise dem Personenschutz zur Überwachung einer Gefahrenquelle eingesetzt, wie sie beispielsweise eine gefährliche Maschine darstellt. Ein derartiger Sicherheitslaserscanner ist aus der DE 43 40 756 A1 bekannt. Dabei wird ein Schutzfeld überwacht, das während des Betriebs der Maschine vom Bedienpersonal nicht betreten werden darf. Erkennt der Sicherheitslaserscanner einen unzulässigen Schutzfeldeingriff, etwa ein Bein einer Bedienperson, so löst er einen Nothalt der Maschine aus. Andere Eingriffe in das Schutzfeld, beispielsweise durch statische Maschinenteile, können vorab als zulässig eingelernt werden. Oft sind den Schutzfeldern Warnfelder vorgelagert, wo Eingriffe zunächst nur zu einer Warnung führen, um den Schutzfeldeingriff und damit die Absicherung noch rechtzeitig zu verhindern und so die Verfügbarkeit der Anlage zu erhöhen. Sicherheitslaserscanner arbeiten in der Regel pulsbasiert.

Die bekannten Sicherheitslaserscanner müssen besonders zuverlässig arbeiten und deshalb hohe Sicherheitsanforderungen erfüllen, beispielsweise die Norm EN13849 für Maschinensicherheit und die Gerätenorm EN61496 für berührungslos wirkende Schutzeinrichtungen (BWS). Zur Erfüllung dieser Sicherheitsnormen sind eine Reihe von Maßnahmen zu treffen, wie sichere elektronische Auswertung durch redundante, diversitäre Elektronik, Funktionsüberwachung oder Überwachung der Verschmutzung optischer Bauteile. Das betrifft besonders die Erkennung einer Beeinträchtigung der Transmission einer Frontscheibe des Laserscanners, auf die bei Einschränkung der Detektionsfähigkeit mit einer sicherheitsgerichteten Abschaltung reagiert werden muss.

Zur Aufdeckung solcher Störeinflüsse verwendet ein Laserscanner üblicherweise optische Testkanäle, die verschiedene Positionen des Frontscheibenbereichs mittels Durchstrahlung prüfen. In einer beispielsweise aus der DE 43 45 446 C2 bekannten Lösung werden über den gesamten Winkelbereich der Frontscheibe eine Vielzahl unabhängiger optischer Testkanäle verteilt, die entsprechend unterschiedliche Bereiche der Frontscheibe testweise durchstrahlen und dadurch eine beeinträchtigte Transmission erkennen. Dazu wird oft eine konkav geformte Frontscheibe verwendet, die schwer zu reinigen ist. Die Verteilung der Testkanäle muss dicht genug sein, um trotz nur punktueller Detektion die von der Norm geforderten kleinen Verschmutzungs- oder Manipulationsobjekte überall sicher zu detektieren. Eine große Zahl von Testkanälen erhöht natürlich die Herstellkosten und den benötigten Bauraum. Außerdem liegen die Testkanäle recht nahe an der Außenkontur des Laserscanners, um der drehenden Ablenkeinheit auszuweichen. Damit werden sie anfällig für Störungen durch Fremdlicht oder andere Sensoren und zufällig oder zur Manipulation in der Nähe befindliche Reflektoren.

Verschmutzungen an der Frontscheibe können je nach Ausprägung das Messsignal schwächen, aber auch Störpulse erzeugen, die sich dem eigentlichen Messsignal überlagern. Der Laserscanner erkennt dann die Frontscheibe als Objekt und misst deren Abstand. Das ließe sich noch relativ einfach anhand des bekannten Abstands der Frontscheibe herausfiltern. Es bleibt aber das ungelöste Problem, dass der Störpuls von der Frontscheibe mögliche Messpulse von nahen Zielen kurz vor dem Laserscanner verdeckt. Deshalb wird herkömmlich versucht, das optische Übersprechen zwischen Sende- und Empfangskanal durch Effekte der Frontscheibe zu minimieren.

Neben Störpulsen, die erst durch Verunreinigungen der Frontscheibe entstehen, gibt einen gerichteten Frontscheibenreflex durch Spiegelung des Sendelichtstrahls. Dieser wird regelmäßig durch Form und Orientierung der Frontscheibe von dem Lichtempfänger und beispielsweise in eine Lichtfalle gelenkt. Es gibt auch Ansätze, diesen gerichteten Frontscheibenreflex für eine Frontscheibenüberwachung zu nutzen, die aber bisher zu keiner befriedigenden Lösung geführt haben, mit der die zusätzlichen Testkanäle tatsächlich ersetzt werden können.

Die EP 2 237 065 A1 offenbart einen Laserscanner, bei dem sich die komplette Messeinheit mit Lichtquelle und Detektor dreht. Auf dem entsprechenden Rotor sind außerdem eine Testlichtquelle und ein Testdetektor untergebracht, während außerhalb des Gehäuses ein Reflektorelement angeordnet ist. So tasten Testlichtquelle und Testdetektor die Frontscheibe im Laufe der Umdrehung mit Hilfe des Reflektorelements ab. Da der Testlichtdetektor zwangsläufig nach außen gerichtet ist, wird er relativ leicht durch Fremdlicht gestört.

In der DE 10 2015 105 264 A1 werden Testkanäle durch die Frontscheibe über einen mit dem Drehspiegel mitbewegten Reflektor geführt. Abschließend diskutiert die DE 10 2015 105 264 A1 verschiedene Konzepte zum Prüfen der Transmissionsfähigkeit. Dabei wird als eine Möglichkeit angeführt, einen Teil des eigentlichen Scanstrahls abzuzweigen. Dieser Ansatz wird aber als nachteilig angesehen, da ein Übersprechen in den eigentlichen Messkanal zu befürchten ist.

Bei einem Laserscanner nach der DE 20 2013 102 440 U1 basiert die Verschmutzungsmessung auf Testkanälen, die reflexiv statt transmissiv messen. Das reduziert aber weder den Aufwand für einen einzelnen Testkanal, noch verringert sich dadurch die Anzahl erforderlicher Testkanäle.

Aus der EP 2 482 094 B1 ist ein Laserscanner bekannt, der einen Reflex an der Innenseite der Frontscheibe auswertet. Dies geschieht allerdings in einem rückwärtigen Totbereich an einem eigens verspiegelten Abschnitt der Frontscheibe für eine Prüfung der Funktionsfähigkeit des Messsystems. Die Transmission der Frontscheibe könnte wegen der Verspiegelung gar nicht bewertet werden, und außerdem ist es die Lichtdurchlässigkeit im Sichtfeld und nicht im Totbereich, die gewährleistet werden müsste.

Die EP 2 642 314 A1 spannt Testlichtpfade durch außen um die Frontscheibe angeordnete Testlichtsender auf, deren Testlicht dann nach mehrfacher Umlenkung an der Frontscheibe und weiteren Reflektoren im Lichtempfänger des Hauptmesssystems empfangen werden. Das spart zwar Testlichtempfänger ein, ist aber weiterhin das Grundprinzip der um die Frontscheibe verteilten Testkanäle.

Aus der EP 2 927 711 A1 ist bekannt, mit einem Testlichtsender die Funktionsfähigkeit des Messystems zu prüfen. In einer Ausführungsform verläuft dessen Testlichtpfad über eine Reflexion an der Frontscheibe. Es wird erwähnt, dass dies in Doppelfunktion für eine Überprüfung der Fronscheibe auf Verunreinigungen genutzt werden könnte. Da jedoch der Testlichtsender nur punktuell bei einem einzigen Scanwinkel vorgesehen ist, wäre die Frontscheibe so nicht sinnvoll prüfbar, und jedenfalls würde für jeden zu prüfenden Abschnitt der Frontscheibe ein zusätzlicher Testlichtsender benötigt, so dass der Hardwareaufwand für die Testkanäle immer noch erheblich wäre.

Die noch unveröffentlichte europäische Patentanmeldung mit dem Aktenzeichen 20156075.2 ordnet ein Lichtumlenkelement im Strahlengang des gerichteten Frontscheibenreflexstrahls an, um ihn ein weiteres Mal an anderer Stelle auf die Frontscheibe zurück und anschließend in den Lichtempfänger zu führen. Das wird in erster Linie in einem Randbereich im Übergang zwischen den Scanwinkeln von Messzone zu einer rückwärtigen Totzone genutzt. Das Problem einer Überlagerung von Frontscheibenreflexstrahl und Empfangslichtstrahl von nahen Zielen bleibt bestehen, und zusätzliche Testkanäle sind weiterhin vorgesehen.

Es ist daher Aufgabe der Erfindung, die Detektionsfähigkeit eines optoelektronischen Sensors auf verbesserte Weise sicherzustellen.

Diese Aufgabe wird durch einen optoelektronischen Sensor, insbesondere einen Laserscanner, und ein Verfahren zur Frontscheibenüberwachung nach Anspruch 1 beziehungsweise 14 gelöst. Ein Lichtsender sendet einen Abtaststrahl aus, der mit Hilfe einer beweglichen Ablenkeinheit den Überwachungsbereich periodisch abtastet, und ein Lichtempfänger erzeugt aus dem nach Remission oder Reflexion an einem Objekt zurückkehrenden Abtaststrahl ein Empfangssignal. Diese Komponenten sind Kern eines Hauptmesssystems des Laserscanners. Als Ablenkeinheit ist vorzugsweise ein Drehspiegel vorgesehen, oder das Hauptmesssystem ist insgesamt in einem drehenden Messkopf untergebracht. Eine Steuer- und Auswertungseinheit wertet das Empfangssignal des Lichtempfängers aus, um Informationen über die angetasteten Objekte zu gewinnen, insbesondere mit einem Lichtlaufzeitverfahren deren Abstände zu messen.

Die Steuer- und Auswertungseinheit erkennt außerdem in einer Frontscheibenüberwachung, wenn die Lichtdurchlässigkeit einer Frontscheibe des Sensors beeinträchtigt ist. Dazu wird ein Frontscheibenreflex bewertet, den die Frontscheibe aus dem Abtaststrahl erzeugt. Die Frontscheibenüberwachung auf deren ausreichende Lichtdurchlässigkeit basiert folglich auf dem Lichtsender des Hauptmesssystems. Der Frontscheibenreflex kann auf zweierlei Weise entstehen, nämlich zum einen durch gerichtete Spiegelung an der Frontscheibe, und zum zweiten durch Streuung an Verunreinigungen der Frontscheibe.

Die Erfindung geht von dem Grundgedanken aus, die Empfindlichkeit der Erfassung für die Frontscheibenüberwachung zu erhöhen. Die Empfindlichkeit ist somit für die Bedürfnisse der Frontscheibenüberwachung angepasst. Dadurch werden auch schwächere Störpulse durch Verunreinigung der Frontscheibe noch zuverlässig erfasst. Die Anforderungen der Objekterkennung und der Frontscheibenüberwachung sind oft konträr. Entsprechend wird vorzugsweise immer in Phasen ohne Frontscheibenüberwachung die Empfindlichkeit wieder herabgesetzt und damit für die Bedürfnisse der eigentlichen Messung von Objekten im Überwachungsbereich angepasst.

Die Erfindung hat den Vorteil, dass die bisher unvereinbaren Bedingungen einer Detektionsfähigkeit insbesondere im Nahbereich und einer verlässlichen Frontscheibenüberwachung zugleich erfüllt werden. Herkömmlich wird eine Frontscheibenüberwachung anhand von Frontscheibenreflexen unter anderem deshalb nicht genutzt, weil bisher dunkler Staub nicht ausreichend zuverlässig detektiert wurde, der aber durchaus einen Detektionsverlust verursachen kann. Dieses Problem ist mit der Erhöhung der Empfindlichkeit der Erfassung während der Frontscheibenüberwachung gelöst. Somit wird eine Frontscheibenüberwachung möglich, die auf dem Hauptmesssystem beruht und gleichzeitig konform zu anwendbaren Normen ist. Der Aufwand für eine Frontscheibenüberwachung wird damit erheblich verringert. Es sind je nach Ausführungsform keine oder jedenfalls weniger Testkanäle erforderlich. Herstellkosten, Komplexität und Baugröße werden verringert.

Die Steuer- und Auswertungseinheit ist bevorzugt dafür ausgebildet, die Frontscheibenüberwachung zyklisch jeweils mit Anheben der Empfindlichkeit der Erfassung durchzuführen. Somit gibt es eine regelmäßige Überprüfung der Transmissionsfähigkeit der Frontscheibe. In den Messphasen dazwischen bleibt die Empfindlichkeit der Erfassung an die Bedürfnisse der Objekterkennung angepasst.

Die Steuer- und Auswertungseinheit ist bevorzugt dafür ausgebildet, die Frontscheibenüberwachung über eine periodische Abtastung hinweg durchzuführen. In einem Laserscanner wird eine periodische Abtastung auch als ein Scan bezeichnet. Die Frontscheibenüberwachung prüft also jeweils den gesamten relevanten Bereich der Frontscheibe über einen oder auch mehrere Scans hinweg.

Die Steuer- und Auswertungseinheit ist bevorzugt dafür ausgebildet, die Frontscheibenüberprüfung jeweils in Zeitintervallen von einer Sekunde, einigen Sekunden, fünf Sekunden, zehn Sekunden oder einigen zehn Sekunden zu wiederholen. Diese Zeitintervalle sind vorzugsweise gleich lang, die Frontscheibenüberprüfung erfolgt also zyklisch. Die Dauer des Zeitintervalls hängt davon ab, wie schnell eine Aufdeckung einer Verunreinigung der Frontscheibe gefordert ist. Die übliche Scanperiode eines Laserscanners liegt deutlich unterhalb einer Sekunde, so dass jeweils erst nach einer großen Zahl von Messzyklen eine Frontscheibenüberprüfung erfolgt.

Die Steuer- und Auswertungseinheit ist bevorzugt dafür ausgebildet, während einer Frontscheibenüberwachung keine Informationen über die Objekte in dem Überwachungsbereich zu gewinnen oder solche Informationen zu verwerfen oder als unzuverlässig zu kennzeichnen. Während einer Frontscheibenüberwachung ist der Sensor nicht optimal für eine Messung eingestellt. Daher findet so lange vorzugsweise keine Auswertungen, insbesondere keine Lichtlaufzeitmessung für Objekte im Überwachungsbereich statt, und die freiwerdenden Rechenkapazitäten stehen für eine Auswertung der Frontscheibenüberwachung zur Verfügung. Die Frontscheibenüberwachung sollte jedoch vorzugsweise noch Elemente der Lichtlaufzeitmessung oder jedenfalls entsprechende Zeitfenster berücksichtigen, damit beispielsweise nur ganz nahe Echos entsprechend dem Abstand der Frontscheibe als Verschmutzung interpretiert werden und nicht beispielsweise fälschlich ein fernes, helles Objekt. Es ist auch denkbar, die Auswertung doch insgesamt vorzunehmen, die Ergebnisse aber anschließend zu verwerfen oder beispielsweise mit einem Flag zu versehen, dass sie während einer Frontscheibenüberwachung gemessen wurden.

Die Steuer- und Auswertungseinheit ist bevorzugt dafür ausgebildet, die Empfindlichkeit der Erfassung zu erhöhen, indem die Sendeleistung des Lichtsenders erhöht, die Empfindlichkeit des Lichtempfängers erhöht und/oder eine Detektionsschwelle zur Erfassung von Objekten herabgesetzt wird. Diese Möglichkeiten, die Empfindlichkeit der Erfassung anzupassen, können einzeln oder kombiniert angewandt werden. Ein Verstellen der optischen Ausgangsleistung des Lichtsenders ist eine sendeseitige Anpassung. Dabei sollten Grenzen des Augenschutzes beziehungsweise die Laserschutzklasse beachtet werden. Die Empfindlichkeit des Lichtempfängers selbst wird beispielsweise über die an eine APD (Avalanche Photodiode) oder SPAD (Single-Photon Avalanche Diode) angelegte Spannung verändert. Außerdem kann ein Verstärkungsfaktor eines Verstärkers verstellt werden, welcher dem Lichtempfänger nachgeschaltet ist. Eine weitere Möglichkeit der Anpassung im Empfangspfad ist das Herabsetzen einer Detektionsschwelle, die beispielsweise dazu dient, einen Empfangszeitpunkt eines Empfangspulses zu bestimmen. Dabei kann es sich um eine echte Schwellenoperation mit einer oder mehreren Schwellen handeln, um einen Empfangspuls zu lokalisieren, sei es mit einem analogen Schwellendetektor oder in einem digitalisierten Empfangssignal, aber auch um Schwellenkriterien, mit denen ein digitalisiertes Empfangssignal ausgewertet wird.

Die Steuer- und Auswertungseinheit ist bevorzugt dafür ausgebildet, die Empfindlichkeit der Erfassung für die Frontscheibenüberwachung um einen Faktor zwei bis zehn oder mehr zu erhöhen. Die Empfindlichkeit wird also sehr deutlich erhöht. Während der Frontscheibenüberwachung sind Übersteuerungen oder ungenaue Laufzeitmessungen durch zu breite Empfangspulse weitgehend unproblematisch. Es geht hier nur um eine verlässliche Erkennung von Verunreinigungen, und dabei überwiegen die Vorteile einer sehr empfindlichen Erfassung.

Die Steuer- und Auswertungseinheit ist bevorzugt dafür ausgebildet, die Empfindlichkeit der Erfassung in Phasen ohne Frontscheibenüberwachung so weit abzusenken, dass der Frontscheibenreflex zu schwach für eine Frontscheibenüberwachung bleibt. Während der Messphasen ohne Frontscheibenüberwachung ist das System so ausjustiert, dass der Frontscheibenreflex klein bleibt, somit die Messung nicht stört und für eine verlässliche Frontscheibenüberwachung nicht genutzt werden könnte. Beispielsweise sind Maßnahmen getroffen, um den gerichteten Frontscheibenreflex zu reduzieren, wie ein Weglenken durch eine schräggestellte Frontscheibe, Beschichtungen der Frontscheibe oder Lichtfallen.

Der Sensor ist vorzugsweise als Sicherheitssensor, insbesondere Sicherheitslaserscanner, gemäß der Norm EN 62998 ausgebildet. Bisherige Sicherheitslaserscanner sind für eine permanente gleichzeitige Detektionsfähigkeit und Frontscheibenüberwachung ausgebildet. Die EN 62998 erlaubt je nach Anforderungsrate der Sicherheitsfunktion, die Verlässlichkeit des Sensors einzuschränken. Ist beispielsweise nur mit wenigen Verletzungen des Überwachungsbereichs beziehungsweise der sicherheitsrelevanten Teilbereiche darin pro Tag zu rechnen, dann ist es akzeptabel, dass der Sensor für einige Sekunden pro Tag seine Sicherheitsfunktion nicht oder nur eingeschränkt garantiert. Eine zyklische Frontscheibenüberwachung, während der das eigentliche Messsystem nur eingeschränkt oder gar nicht zur Verfügung steht, ist also in einem Sensor erlaubt, der gemäß EN 62998 zertifiziert wird. Eine sicherheitsrelevante Verschmutzung wird erfindungsgemäß rechtzeitig erkannt, beispielsweise in spätestens fünf Sekunden durch entsprechend häufige Frontscheibenüberwachung, und in diesem Fall wird das Gerät in einen sicheren Zustand gebracht.

Der Sensor weist bevorzugt einen Sicherheitsausgang für die Ausgabe eines sicherheitsgerichteten Abschaltsignals auf. Der Sicherheitsausgang, insbesondere ein OSSD (Output Signal Switching Device), ist sicher im Sinne einschlägiger Normen, beispielsweise zweikanalig ausgeführt, und dient zur Einleitung einer sicherheitsgerichteten Maßnahme wie einem Notaus oder etwas allgemeiner dem Herstellen eines sicheren Zustands. Die Steuer- und Auswertungseinheit ist bevorzugt für eine Schutzfeldauswertung ausgebildet ist, in der bestimmt wird, ob sich ein Objekt in mindestens einem konfigurierten Schutzfeld innerhalb des Überwachungsbereichs befindet. Damit ist eine bewährte Form der Sicherheitsauswertung bereits in den Sensor integriert, der direkt ein sicherheitsgerichtetes Abschaltsignal für eine Maschine oder eine zwischengeschaltete Sicherheitssteuerung bereitstellt.

Der Sensor ist bevorzugt als Mehrlagenscanner mit mehreren in Elevation separierten Abtaststrahlen ausgebildet, wobei mindestens einer der Abtaststrahlen für die Frontscheibenüberwachung verwendet ist. Ein Mehrlagenscanner verwendet nicht nur einen, sondern mehrere Abtaststrahlen, und überwacht dementsprechend eine Vielzahl von Überwachungsebenen. Bei hinreichender Anzahl beziehungsweise Dichte der Abtaststrahlen genügt es, wenn die Frontscheibenüberwachung auf einem oder einigen dieser Abtaststrahlen basiert. Wenn die Überwachungslücke in Elevation hinnehmbar ist, kann sogar ein Abtaststrahl dediziert nur für die Frontscheibenüberwachung herangezogen werden. Für diesen Abtaststrahl kann dann die Empfindlichkeit permanent erhöht sein.

Das erfindungsgemäße Verfahren kann auf ähnliche Weise weitergebildet werden und zeigt dabei ähnliche Vorteile. Derartige vorteilhafte Merkmale sind beispielhaft, aber nicht abschließend in den sich an die unabhängigen Ansprüche anschließenden Unteransprüchen beschrieben.

Die Erfindung wird nachstehend auch hinsichtlich weiterer Merkmale und Vorteile beispielhaft anhand von Ausführungsformen und unter Bezug auf die beigefügte Zeichnung näher erläutert. Die einzige Abbildung der Zeichnung zeigt in:

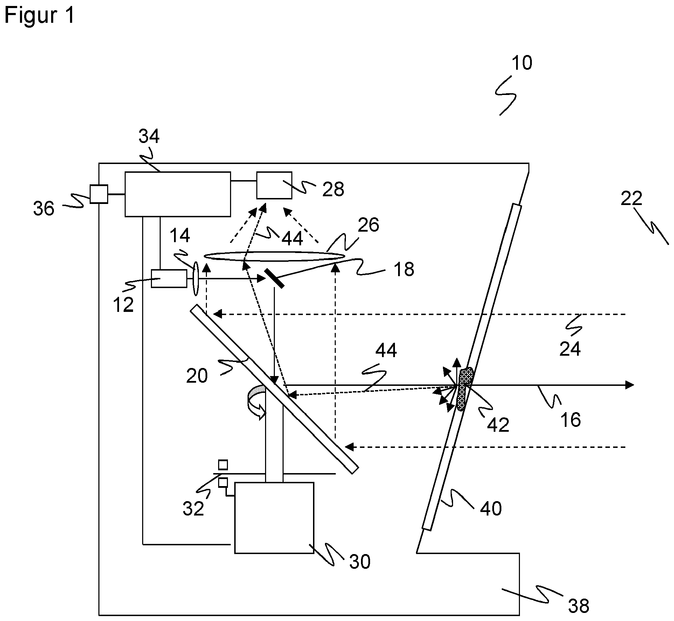

- Fig. 1: eine Schnittdarstellung eines optoelektronischen Sensors in einer Ausführungsform als Laserscanner.

Fig. 1 zeigt eine schematische Schnittdarstellung durch einen optoelektronischen Sensor 10 in einer Ausführungsform als Laserscanner. Ein Lichtsender 12, etwa ein Laser in Form eines Kantenemitters oder eines VCSELs, sendet ein Lichtsignal aus, das periodisch amplitudenmoduliert ist oder vorzugsweise mindestens einen kurzen Lichtpuls aufweist. Das Sendelicht wird von einer Sendeoptik 14 zu einem ausgesandten Lichtstrahl 16 kollimiert, der über einen Umlenkspiegel 18 und eine bewegliche Ablenkeinheit 20 in einen Überwachungsbereich 22 gelenkt und dort von einem gegebenenfalls vorhandenen Objekt remittiert oder reflektiert wird. Ein Teil dieses Lichts kehrt als einfallender remittierter Lichtstrahl 24 zu dem Sensor 10 zurück und wird von der Ablenkeinheit 20 zu einer Empfangsoptik 26 umgelenkt und von dort auf einen Lichtempfänger 28 gebündelt, beispielsweise mindestens eine Photodiode, APD (Avalanche Photo Diode) oder SPAD (Single-Photon Avalanche Diode). Der Sensor 10 gemäß Figur 1 hat eine koaxiale Anordnung, in welcher der ausgesandte Lichtstrahl 16 und der einfallende remittierte Lichtstrahl 24 auf einer optischen Achse laufen. Das ist beispielhaft zu verstehen, eine biaxiale Anordnung ist auch denkbar, ebenso wie die sendeseitige Einkopplung auf die gemeinsame optische Achse auch anders als über den Umlenkspiegel 18 realisiert sein kann.

Die Ablenkeinheit 20 kann als Schwingspiegel ausgestaltet sein, ist aber in der Regel ein Drehspiegel, der durch Antrieb eines Motors 30 kontinuierlich rotiert. Alternativ ist kein Drehspiegel vorgesehen, sondern die Ablenkeinheit 20 ist als rotierender Messkopf samt Lichtsender 12 und Lichtempfänger 28 ausgestaltet. Die jeweilige Winkelstellung der Ablenkeinheit 20 wird über einen Encoder 32 erfasst. Der von dem Lichtsender 12 erzeugte ausgesandte Lichtstrahl 16 oder Abtaststrahl überstreicht somit den durch die Bewegung erzeugten Überwachungsbereich 22. Wird von dem Lichtempfänger 28 ein remittierter Lichtstrahl 24 aus dem Überwachungsbereich 22 empfangen, so kann aus der Winkelstellung der Ablenkeinheit 20 mittels des Encoders 32 auf die Winkellage des Objektes in dem Überwachungsbereich 22 geschlossen werden.

Zusätzlich wird die Lichtlaufzeit von Aussenden des Lichtstrahls 16 bis zu dem Empfang des remittierten Lichtstrahls 24 nach Reflexion an dem Objekt in dem Überwachungsbereich 22 ermittelt. Dazu sind alle Lichtlaufzeitverfahren denkbar, insbesondere Phasenverfahren, Pulsverfahren oder Pulsmittelungsverfahren, wobei in Sicherheitsanwendungen vorzugsweise pulsbasierte Verfahren eingesetzt werden. Aus der Lichtlaufzeit wird unter Verwendung der Lichtgeschwindigkeit auf die Entfernung des Objektes von dem Sensor 10 geschlossen. Diese Auswertung erfolgt in einer Auswertungseinheit 34, die dafür mit dem Lichtsender 12, dem Lichtempfänger 28, dem Motor 30 und dem Encoder 32 verbunden ist.

Über den Winkel und die Entfernung stehen dann zweidimensionale Polarkoordinaten aller Objekte in dem Überwachungsbereich 22 zur Verfügung. In dem Überwachungsbereich 22 können somit beispielsweise zweidimensionale Schutzfelder definiert werden, in die unzulässige Objekte wie Bedienpersonen oder deren Körperteile nicht eingreifen dürfen. Erkennt die Auswertungseinheit 34 einen unzulässigen Schutzfeldeingriff, so wird über einen sicheren Ausgang 36 (OSSD, Output Signal Switching Device) ein sicherheitsgerichtetes Abschaltsignal ausgegeben, um beispielsweise eine überwachte gefährliche Maschine anzuhalten oder in eine ungefährliche Position zu verbringen. Das ist nur eine mögliche Anwendung des Sensors 10. Alternativ werden beispielsweise über den Ausgang 36 Messdaten ausgegeben.

Alle genannten Funktionskomponenten sind in einem Gehäuse 38 angeordnet, das im Bereich des Lichtaus- und Lichteintritts eine Frontscheibe 40 aufweist. Die Frontscheibe 40 ist bei einem Laserscanner häufig, aber nicht zwingend als Rotationskörper ausgebildet und muss sich auch nicht unbedingt über 360° erstrecken, so dass dann ein gewisser Winkelbereich als Totzone verbleibt. Abweichend von Figur 1 ist statt einer im Querschnitt geraden Kontur auch eine Krümmung denkbar.

Um die Detektionsfähigkeit des Sensors 10 zu garantieren, wird die Frontscheibe 40 auf Lichtdurchlässigkeit überwacht. Wenn die Lichtdurchlässigkeit so stark beeinträchtigt ist, dass deswegen ein Objekt übersehen werden könnte, wird in sicherheitstechnischer Anwendung des Sensors 10 eine sicherheitsgerichtete Reaktion ausgelöst. Herkömmlich sind für die Frontscheibenüberwachung über den Umfang verteilt mehrere Testkanäle vorgesehen. Das ist auch erfindungsgemäß ergänzend denkbar. Die eigentlich zu erläuternde erfindungsgemäße Frontscheibenüberwachung basiert jedoch nicht auf Testkanäle, sondern einer Auswertung von Frontscheibenreflexen.

Ein Frontscheibenreflex kann mindestens zwei Ursachen haben. Zum einen wird beim Austritt des ausgesandten Lichtstrahls 16 ein gewisser Anteil an der Frontscheibe 40 gespiegelt. Dieser gerichtete Frontscheibenreflex wird üblicherweise als Störsignal aufgefasst. Deshalb ist die Frontscheibe 40 in Figur 1 auch schräggestellt, der gerichtete Frontscheibenreflex trifft dadurch nicht auf den Lichtempfänger 28. In anderen Ausführungsformen kann der gerichtete Frontscheibenreflex jedoch direkt, beispielsweise über eine senkrecht gestellte Frontscheibe, oder indirekt über eine oder mehrere Lichtumlenkungen in den Lichtempfänger 28 geleitet und für die Frontscheibenüberwachung genutzt werden.

Zum anderen wird ein Anteil des ausgesandten Lichtstrahls 16 an der Frontscheibe 40 gestreut, wenn es dort eine Verunreinigung 42 gibt. Die ungerichtete Streuung sorgt für einen Frontscheibenreflex 44, der über den Empfangspfad mit der beweglichen Ablenkeinheit 20 und der Empfangsoptik 26 auf den Lichtempfänger 28 fällt. Das Signal des Frontscheibenreflexes 44 ist jedoch relativ schwach. Das gilt besonders für den Fall dunkler Stäube als Verunreinigung 42. Unter normalen Bedingungen, in denen der Sensor 10 in seiner Empfindlichkeit für die Detektion von Objekten im Überwachungsbereich 22 eingestellt ist, lässt sich deshalb die Frontscheibe 40 anhand des Frontscheibenreflexes 44 nicht zuverlässig überwachen.

Die Frontscheibenüberwachung wird jedoch durch Erhöhung der Empfindlichkeit möglich, da dann die Signalanteile des Frontscheibenreflexes 44 von einer Verunreinigung 42 stark genug werden. Die Empfindlichkeit lässt sich auf verschiedene Weisen sende- oder empfangsseitig anpassen, wobei auch Kombinationen möglich sind: Veränderung der Sendeleistung des Lichtsenders 12, Veränderung der Empfindlichkeit des Lichtempfängers 28 jeweils insbesondere durch veränderte angelegte Spannung, Anpassung eines Verstärkungsfaktors eines Verstärkers im Empfangspfad nach dem Lichtempfänger 28 (VGA, Variable-Gain-Amplifier) oder Veränderung einer analogen Schwelle zur Signalabtastung oder einer Schwelle in einer digitalen Signalauswertung in der Steuer- und Auswertungseinheit 34.

Bei erhöhter Empfindlichkeit können Signalanteile des Frontscheibenreflexes 44 Messsignale von nahen Objekten überlagern, so dass solche Objekte womöglich übersehen werden. In der bisher für Sicherheitslaserscanner allein beachteten Norm IEC61496-3 ist jedoch gefordert, dass das Hauptmesssystem permanent bei 100% Verlässlichkeit für die Detektion von Personen zur Verfügung steht. Das ist mit einer heraufgesetzten Empfindlichkeit aber gerade nicht gewährleistet.

Die Sicherheitsnorm EN 62998 ist für anwendungsspezifische Sensorlösungen konzipiert. Sie kann herangezogen werden, wenn es keine explizit anwendbare B-Norm gibt, etwa weil jene den Einsatzort oder die verwendete Technologie der Lösung nicht abdeckt. Für bestimmte Anwendungen, beispielsweise im Außenbereich (Outdoor), kann somit EN 62998 anstelle der IEC 61496-3 erfüllt werden.

Die EN 62998 wiederum erlaubt, je nach Anforderungsrate der Sicherheitsfunktion die Verlässlichkeit des Sensors 10 einzuschränken. Wenn beispielsweise pro Tag nur mit wenigen Verletzungen des Überwachungsbereichs 22 beziehungsweise der darin konfigurierten Schutzfelder oder sonstigen sicherheitsrelevanten pro Tag zu rechnen ist, dann ist es akzeptabel, dass der Sensor 10 für einige Sekunden pro Tag seine Sicherheitsfunktion nicht oder eingeschränkt ausführen kann.

Das wird erfindungsgemäß dafür genutzt, die Empfindlichkeit der Erfassung für die Frontscheibenüberwachung vorübergehend zu erhöhen. Das kann insbesondere zyklisch erfolgen, etwa indem jeweils nach fünf Sekunden eine Messung mit hoher Empfindlichkeit für die Frontscheibenüberwachung verwendet wird. Die Empfindlichkeit wird dabei vorzugsweise deutlich angehoben, etwa um einen Faktor zwei bis zehn oder mehr, da es hier darum geht, auch geringere Effekte von dunkeln Stäuben oder ähnlichen Verunreinigungen 42 zu erfassen. Die hohe Empfindlichkeit wird für die Frontscheibenüberwachung beibehalten, beispielsweise für einen oder mehrere Scans beziehungsweise Umdrehungen der Ablenkeinheit 20, und dann für weitere Messungen von Objekten im Überwachungsbereich wieder zurückgestellt. Somit wird spätestens nach einem Zyklus der Frontscheibenüberwachung eine Verschmutzung der Frontscheibe 40 aufgedeckt und insoweit auch die Anforderung der IEC 61496-e erfüllt.

Während der erhöhten Empfindlichkeit werden auch kleine, von einerVerunreinigung 42 stammende Störsignale oder -pulse zuverlässig erkannt. Solange werden andererseits weitere Messsignale insbesondere von nahen Objekten dicht an der Frontscheibe 40 möglicherweise nicht erkannt. Auch reagiert der Sensor 10 solange sehr empfindlich auf Störobjekte im Überwachungsbereich 22, wie etwa Staubpartikel. Deshalb werden während der Frontscheibenüberwachung vorzugsweise keine Messergebnisse über Objekte im Überwachungsbereich 22 gewonnen, oder sie werden verworfen beziehungsweise als unzuverlässig markiert.

Bisher wurde ein Sensor 10 mit einem ausgesandten Lichtstrahl 16 und somit im Falle eines Laserscanners nur einer Überwachungsebene beschrieben. Die erfindungsgemäße Frontscheibenüberwachung lässt sich auch bei einem Mehrlagenscanner einsetzen. Das ist ein Laserscanner, der mehrere Abtaststrahlen in Elevation übereinander aufweist und somit einen Raumbereich durch mehreren Ebenen überwacht, oder genauer mit einer Struktur ähnlich geschachtelten Sanduhren. Die mehreren Abtaststrahlen entstehen durch mehrere Lichtsender oder Strahlteilungen und werden dementsprechend in mehreren Lichtempfängern oder einem Lichtempfänger mit mehreren Empfangszonen oder Pixeln empfangen.

Da ein Mehrlagenscanner ein Objekt in seinen mehreren Ebenen erfasst, ist es statistisch unwahrscheinlicher, dass es zu einem Detektionsverlust aufgrund von lokalen oder homogenen Verschmutzungen kommt. Sofern also bei einem einlagigen Laserscanner noch zusätzliche Testkanäle für die Frontscheibenüberwachung erforderlich waren, so genügen bei einem Mehrlagenscanner weniger Testkanäle, oder es kann spätestens für einen Mehrlagenscanner ganz auf zusätzliche Testkanäle verzichtet werden. Weiterhin genügt es, die Frontscheibe 40 nur mit einem Teil der mehreren Abtaststrahlen zu prüfen. Ein vorteilhafter Sonderfall ist ein dedizierter Abtaststrahl, der ständig bei hoher Empfindlichkeit die Frontscheibe 40 prüft. Etwaige Messausfälle werden durch die benachbarten Abtaststrahlen kompensiert, beziehungsweise die kleine Messlücke in Elevation durch diesen dedizierten Abtaststrahl für die Frontscheibenüberwachung wird toleriert.

## Patentansprüche

1. Optoelektronischer Sensor (10), insbesondere Laserscanner, zur Erfassung von Objekten in einem Überwachungsbereich (22), der einen Lichtsender (12) zum Aussenden eines Abtaststrahls (16), eine bewegliche Ablenkeinheit (20) zur periodischen Abtastung des Überwachungsbereichs (22) mit dem Abtaststrahl (16), einen Lichtempfänger (28) zum Erzeugen eines Empfangssignals aus dem von den Objekten remittierten Abtaststrahl (24), eine Frontscheibe (40) sowie eine Steuer- und Auswertungseinheit (34) aufweist, die dafür ausgebildet ist, aus dem Empfangssignal Informationen über die Objekte in dem Überwachungsbereich (22) zu gewinnen sowie in einer Frontscheibenüberwachung eine beeinträchtigte Lichtdurchlässigkeit der Frontscheibe (40) durch Bewertung eines Frontscheibenreflexes (44) zu erkennen, der an der Frontscheibe (40) aus dem Abtaststrahl (16) erzeugt ist,
**dadurch gekennzeichnet,**
**dass** die Steuer- und Auswertungseinheit (34) weiterhin dafür ausgebildet ist, die Empfindlichkeit der Erfassung für die Frontscheibenüberwachung zu erhöhen.

2. Sensor (10) nach Anspruch 1,
wobei die Steuer- und Auswertungseinheit (34) dafür ausgebildet ist, die Frontscheibenüberwachung zyklisch jeweils mit Anheben der Empfindlichkeit der Erfassung durchzuführen.

3. Sensor (10) nach Anspruch 1 oder 2,
wobei die Steuer- und Auswertungseinheit (34) dafür ausgebildet ist, die Frontscheibenüberwachung über eine periodische Abtastung hinweg durchzuführen.

4. Sensor (10) nach einem der vorhergehenden Ansprüche,
wobei die Steuer- und Auswertungseinheit (34) dafür ausgebildet ist, die Frontscheibenüberprüfung jeweils in Zeitintervallen von einer Sekunde, einigen Sekunden, fünf Sekunden, zehn Sekunden oder einigen zehn Sekunden zu wiederholen.

5. Sensor (10) nach einem der vorhergehenden Ansprüche,
wobei die Steuer- und Auswertungseinheit (34) dafür ausgebildet ist, während einer Frontscheibenüberwachung keine Informationen über die Objekte in dem Überwachungsbereich (22) zu gewinnen oder solche Informationen zu verwerfen oder als unzuverlässig zu kennzeichnen.

6. Sensor (10) nach einem der vorhergehenden Ansprüche,
wobei die Steuer- und Auswertungseinheit (34) dafür ausgebildet ist, die Empfindlichkeit der Erfassung zu erhöhen, indem die Sendeleistung des Lichtsenders (12) erhöht, die Empfindlichkeit des Lichtempfängers (28) erhöht und/oder eine Detektionsschwelle zur Erfassung von Objekten herabgesetzt wird.

7. Sensor (10) nach einem der vorhergehenden Ansprüche,
wobei die Steuer- und Auswertungseinheit (34) dafür ausgebildet ist, die Empfindlichkeit der Erfassung für die Frontscheibenüberwachung um einen Faktor zwei bis zehn zu erhöhen.

8. Sensor (10) nach einem der vorhergehenden Ansprüche,
wobei die Steuer- und Auswertungseinheit (34) dafür ausgebildet ist, die Empfindlichkeit der Erfassung in Phasen ohne Frontscheibenüberwachung so weit abzusenken, dass der Frontscheibenreflex (44) zu schwach für eine Frontscheibenüberwachung bleibt.

9. Sensor (10) nach einem der vorhergehenden Ansprüche,
der als Sicherheitssensor, insbesondere Sicherheitslaserscanner, gemäß der Norm EN 62998 ausgebildet ist.

10. Sensor (10) nach einem der vorhergehenden Ansprüche,
der als Mehrlagenscanner mit mehreren in Elevation separierten Abtaststrahlen ausgebildet ist, wobei mindestens einer der Abtaststrahlen für die Frontscheibenüberwachung verwendet ist.

11. Verfahren zur Frontscheibenüberwachung einer Frontscheibe (40) eines optoelektronischen Sensors (10), insbesondere eines optoelektronischen Sensors (10) nach einem der vorhergehenden Ansprüche, wobei zur Erfassung von Objekten in einem Überwachungsbereich (22) ein Abtaststrahl (16) ausgesandt, mit dem Abtaststrahl (16) der Überwachungsbereich (22) periodisch abgetastet, aus dem von den Objekten in dem Überwachungsbereich (22) remittierten Abtaststrahl (24) ein Empfangssignal erzeugt und dieses ausgewertet wird, um Informationen über die Objekte zu gewinnen sowie für die Frontscheibenüberwachung eine beeinträchtigte Lichtdurchlässigkeit der Frontscheibe (40) durch Bewertung eines Frontscheibenreflexes (44) erkannt wird, der an der Frontscheibe (40) aus dem Abtaststrahl (16) erzeugt wird,
**dadurch gekennzeichnet,**
**dass** die Empfindlichkeit der Erfassung für die Frontscheibenüberwachung erhöht wird.
